Europäisches Patentamt

European Patent Office

Office européen des brevets

(19)

(11) Veröffentlichungsnummer : **0 035 674**
**B1**

(12) # EUROPÄISCHE PATENTSCHRIFT

(45) Veröffentlichungstag der Patentschrift :
05.10.83

(21) Anmeldenummer : 81101190.7

(22) Anmeldetag : 19.02.81

(51) Int. Cl.³ : **H 04 L 25/49**

(54) **Umschaltbare freilaufende Verwürfler- und Entwürfleranordnung (Scrambler und Descrambler).**

(30) Priorität : 22.02.80 DE 3006717

(43) Veröffentlichungstag der Anmeldung :
16.09.81 Patentblatt 81/37

(45) Bekanntmachung des Hinweises auf die Patenterteilung : 05.10.83 Patentblatt 83/40

(84) Benannte Vertragsstaaten :
AT BE CH DE FR GB IT LI NL SE

(56) Entgegenhaltungen :
US A 3 515 805

THE BELL SYSTEM TECHNICAL JOURNAL, Band 50, Nr. 2, Februar 1971, Seiten 481-499 New York, U.S.A. C.W. BRODERICK : « A digital transmission system for TD-2 radio »

(73) Patentinhaber : SIEMENS AKTIENGESELLSCHAFT
Berlin und München Wittelsbacherplatz 2
D-8000 München 2 (DE)

(72) Erfinder : Dömer, Josef, Ing. grad.
Flossgatter 18
D-8021 Hohenschäftlarn (DE)
Erfinder : Fütterer, Augustin, Ing. Grad.
Sonnenweg 6
D-8041 Dietersheim (DE)

## Umschaltbare freilaufende Verwürfler- und Entwürfleranordnung (Scrambler und Descrambler)

Die Erfindung betrifft eine umschaltbare freilaufende Verwürfler- und Entwürfleranordnung mit einem mehrstufigen getakteten Schieberegister, an dessen Ausgänge der sechsten und der siebten Stufe die Eingänge eines ersten Exklusiv-ODER-Gatters, das zusammen mit wenigstens einem zweiten und einem dritten Exklusiv-ODER-Gatters in einem ersten Rückkopplungsweg enthalten ist, angeschlossen sind, daß an die Ausgänge weiterer Schieberegisterstufen jeweils ein Eingang eines vierten und eines fünften Exklusiv-ODER-Gatters angeschlossen ist, die zusammen mit einem nachgeschalteten NAND-Gatter und einem mit dem Ausgang des NAND-Gatters verbundenen getakteten Zähler in einem zweiten Rückkopplungsweg enthalten sind, daß dem mehrstufigen Schieberegister eine erste zusätzliche getaktete Schieberegisterstufe vorgeschaltet ist, deren Ausgang mit dem Eingang des zweiten im ersten Rückkopplungsweg angeordneten Exklusiv-ODER-Gatters und außerdem mit dem einen Eingang eines ersten Umschalters verbunden ist, dessen anderer Eingang mit dem Ausgang des dritten Exklusiv-ODER-Gatters und mit dem Signalausgang verbunden ist, und daß der Ausgang des ersten Umschalters mit dem Eingang des Schieberegisters und der Ausgang des Zählers mit einem Eingang des zweiten im ersten Rückkopplungsweg angeordneten Exklusiv-ODER-Gatters verbunden ist.

Bei der Übertragung digitaler Signale können Impulsmuster auftreten, die einen hohen Energieanteil bei bestimmten diskreten Frequenzen oder aber auch einen Gleichstromanteil aufweisen. Zur Vermeidung dieser Impulsmuster ist es üblich, das zu übertragende Signal zu verwürfeln. Die Verwürfelung geht dabei so vor sich, daß eine sendeseitig mittels rückgekoppeltem Schieberegister erzeugte Pseudozufallsfolge und das zu übertragende Signal mod-2 addiert werden. Empfangsseitig wird dann eine Entwürfelung nötig, die in einer weiteren mod-2-Addition der sendeseitig bereits verwendeten Pseudozufallsfolge zum empfangenen Signal bestehen kann. In diesem Falle ist eine Synchronisierung des sendeseitigen und des empfangsseitigen Pseudozufallsgenerators notwendig, beispielsweise durch Triggern.

Bekannt ist weiterhin, zur Verwürfelung digitaler Signale freilaufende und damit selbstsynchronisierende Verwürfler- und Entwürfleranordnungen zu verwenden. Dabei wird sendeseitig die übliche mod-2-Addition vorgenommen und anschließend das verwürfelte Signal durch das im Pseudozufallsgenerator enthaltende Schieberegister geleitet. Empfangsseitig wird das empfangene Signal einem Schieberegister des empfangsseitigen Pseudozufallsgenerators zugeführt, das dem sendeseitig verwendeten Schieberegister entspricht.

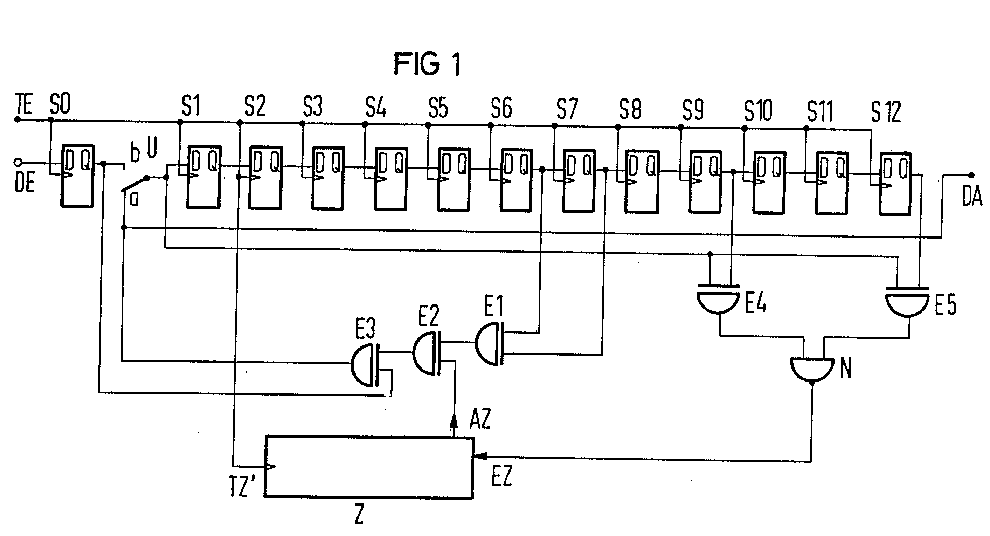

Im Anhang zu Bericht V 27 des CCITT-Orange Book (Data Transmission over the Telephone Network), Seiten 116 und 117 ist eine umschaltbare Verwürfler- und Entwürfleranordnung beschrieben, wie sie bei PCM-Übertragungsstrecken für hohe Bitraten eingesetzt wird. Diese Anordnung ist in der Fig. 1 dargestellt.

Die beschriebene Anordnung besteht im Prinzip aus einem zwölfstufigen Schieberegister mit Rückkopplungen vom Ausgang der sechsten und der siebten Stufe, wobei die Signale über die Reihenschaltung aus drei Exklusiv-ODER-Gattern so rückgekoppelt werden, daß bei konstantem Eingangssignal, also beispielsweise bei einem Dauer-Eins-Signal, ein verwürfeltes Ausgangssignal mit einer Periode von $2^7 - 1 = 127$ Bit entsteht. Die drei Exklusiv-ODER-Gatter E1, E2, E3 bilden dabei einen ersten Rückkopplungsweg zum Eingang des Schieberegisters. Das zweite Exklusiv-ODER-Gatter E2 hat dabei nur eine Durchschaltefunktion, es ist für den eigentlichen Rückkopplungsvorgang durch einen logischen Nullpegel an einen seiner Eingänge ohne Einfluß und dient nur zur Einkopplung von Rücksetzimpulsen in den ersten Rückkopplungskreis. Dieser logische Nullpegel wird durch einen getakteten Synchronzähler Z mit einer Endstellung bei 33 erzeugt, der in einer zweiten Rückkopplungsschleife enthalten ist. Diese zweite Rückkopplungsschleife dient zum sicheren Anlaufen der Anordnung nach dem Einschalten. Die zweite Rückkopplungsschleife enthält zwei Exklusiv-ODER-Gatter, E4 und E5, deren einer Eingang mit dem Ausgang der neunten bzw. der zwölften Schieberegisterstufe S9 bzw. S12 verbunden ist und deren Ausgänge über ein NAND-Gatter N mit dem Eingang des Synchronzählers Z zur Erzeugung von Rücksetzsignalen verbunden sind.

Der Synchronzähler Z selbst enthält eingangsseitig ein NOR-Gatter, das über ein Zeitglied mit einem bis zu 32 zählenden Synchronzählerbaustein mit angeschlossenen Frequenzteiler im Verhältnis 2 : 1 verbunden ist, an das ein J-K-Flipflop angeschlossen ist.

Dem Schieberegister ist zur Erzeugung des Bit Nr. Null eine zusätzliche Schieberegisterstufe SO vorgeschaltet, deren Ausgang mit dem einen Anschluß b eines Umschalters U verbunden ist, dessen Ausgang mit dem Eingang des Schieberegisters verbunden ist und der bei Betrieb der Schaltung als Entwürfler (Descrambler) die vorgeschaltete Schieberegisterstufe SO mit dem nachgeschalteten Schieberegister unmittelbar verbindet. In der Stellung als Verwürfler (Scrambler) ist der Ausgang der vorgeschalteten Schieberegisterstufe mit dem einen Eingang des dritten Exklusiv-ODER-Gatters im ersten Rückkopplungsweg verbunden, von dessen Ausgang die Signale zum anderen Eingang a des ersten Umschalters gelangen. Ist der Umschalter in dieser Stellung, dann werden diese Signale, die gleichzeitig die Ausgangssignale darstellen, durch das Schieberegister geleitet und es ergibt sich die Verwürflerfunktion.

Im zweiten Rückkopplungsweg wird geprüft, ob der Signalzustand des Bit Nr. 0 und des Bit Nr. 9 bzw. des Bit Nr. 0 und des Bit Nr. 12 gleich sind. Ist dieses für 33 Takte der Fall, dann gibt der Zähler ein Ausgangssignal an den ersten Rückkopplungsweg ab, durch das eines der durch das zweite Exklusiv-ODER-Gatter E2 durchlaufenden Bit invertiert wird, außerdem wird der Zähler zurückgesetzt. Haben dagegen das Bit Nr. 0 und das Bit Nr. 9 und außerdem Bit Nr. 0 und Bit Nr. 12 unterschiedlichen Signalzustand, dann wird nur der Zähler über seinen an das NAND-Gatter N angeschlossenen Reset-Eingang auf seinen Anfangszustand zurückgesetzt.

Der Verwürfler unterscheidet sich vom Entwürfler dadurch, daß die Daten in das Schieberegister via das dritte Exklusiv-ODER-Gatter E3 eingespeist werden.

Die Signale durchlaufen zwischen zwei Taktzuständen die Hintereinanderschaltung des ersten bis dritten Exklusiv-ODER-Gatters, E1 ... E3, bzw. die Parallelschaltung aus dem vierten und dem fünften Exklusiv-ODER-Gatters E4, E5 und das NAND-Gatter N. Die gesamte Signallaufzeit als Summe der Laufzeiten in den einzelnen Gattern ist damit vergleichsweise lang. Für sehr hohe Impulsfolgefrequenzen ist damit die Verwürfler-Entwürfleranordnung nach dem Stand der Technik nicht geeignet.

Die Aufgabe der Erfindung besteht also darin, eine umschaltbare freilaufende Verwürfler-Entwürfleranordnung der eingang erwähnten Art zu schaffen, die auch für sehr hohe Impulsfolgefrequenzen und damit für PCM-Systeme mit sehr hohen Bitraten geeignet ist.

Erfindungsgemäß wird die Aufgabe dadurch gelöst, daß ein elfstufiges Schieberegister vorgesehen ist, daß der Ausgang des ersten und des zweiten Exklusiv-ODER-Gatters jeweils getrennt mit den beiden Eingängen des dritten Exklusiv-ODER-Gatters verbunden ist, daß ein Eingang des vierten und des fünften Exklusiv-ODER-Gatters getrennt mit einem Ausgang der achten und der elften Schieberegisterstufe verbunden ist, daß der Ausgang des vierten Exklusiv-ODER-Gatters mit dem D-Eingang eines ersten getakteten D-Flipflops und der Ausgang des fünften Exklusiv-ODER-Gatters mit dem D-Eingang eines zweiten getakteten D-Flipflops verbunden ist, daß die Q-Ausgänge dieser beiden D-Flipflops jeweils getrennt mit den Eingängen des NAND-Gatters verbunden sind, daß ein sechstes Exklusiv-ODER-Gatter vorgesehen ist, dessen Eingänge jeweils getrennt mit den Ausgängen der vierten und der fünften Schieberegisterstufe und dessen Ausgang mit dem einen Eingang eines siebten Exklusiv-ODER-Gatters verbunden ist, dessen anderer Eingang mit dem Eingang für das umzuformende Signal und dessen Ausgang mit dem D-Eingang eines dritten D-Flipflops verbunden ist, daß ein zweiter Umschalter vorgesehen ist, dessen einer Eingang mit dem Q-Ausgang des dritten D-Flipflops und dessen anderer Eingang mit dem Q-Ausgang einer zweiten zusätzlichen Schieberegisterstufe verbunden ist, die zwischen Signaleingang und erster zusätzlicher Schieberegisterstufe geschaltet ist und daß der Ausgang des zweiten Umschalters mit den zweiten Eingängen des vierten und des fünften Exklusiv-ODER-Gatters verbunden ist. Die erfindungsgemäße Lösung behält den besonderen Vorteil der leichten Integrierbarkeit bei, so daß der Mehraufwand gegenüber der Lösung nach dem Stand der Technik unerheblich ist.

Eine wegen des leichten Aufbaus mittels handelsüblicher Elemente günstige Lösung der Erfindung ergibt sich dadurch, daß die erste zusätzliche Schieberegisterstufe zwecks Realisierung des ersten Umschalters mittels D-Master-Slave-Flipflop mit Eingangsmultiplexer, der zweite Umschalter als separater Multiplexer und alle anderen Schieberegisterstufen und die D-Flipflops mittels D-Master-Slave-Flipflops aufgebaut sind.

Die Erfindung soll im folgenden an Hand der Zeichnung näher erläutert werden. In der Zeichnung zeigt

Figur 1 eine umschaltbare freilaufende Verwürfler- und Entwürfleranordnung nach dem Stand der Technik und

Figur 2 eine umschaltbare freilaufende Verwürfler- und Entwürfleranordnung nach der Erfindung.

Die Anordnung nach der Fig. 1 wurde bei der Besprechung des Standes der Technik weitgehend erläutert, so daß an dieser Stelle auf weitere Erläuterungen verzichtet wird.

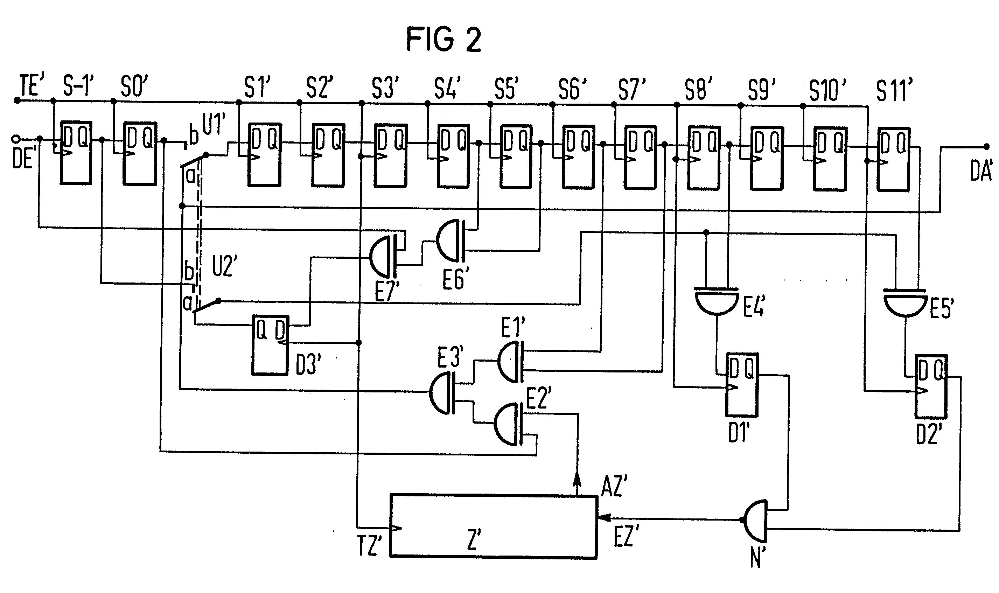

Der umschaltbare freilaufende Verwürfler und Entwürfler nach der Fig. 2 wird ebenfalls durch einen Umschalter U1' von Verwürfelbetrieb entsprechend Stellung a auf Entwürfelbetrieb entsprechend Stellung b umgeschaltet. Mit dem Ausgang des Umschalters U1' ist ein elfstufiges Schieberegister mit den Stufen S1' ... S11' verbunden, daß zwar mittels einzelner D-Flipflops aufgebaut werden kann, in der Praxis aber aus einer integrierten Schaltung besteht. So wie beim Stande der Technik sind auch in diesem Falle mit den Ausgängen der sechsten und der siebten Schieberegisterstufe die Eingänge eines ersten Exklusiv-ODER-Gatters E1' verbunden, dessen Ausgang aber mit dem einen Eingang eines dritten Exklusiv-ODER-Gatters E3' verbunden ist, an dessen anderen Eingang der Ausgang eines zweiten Exklusiv-ODER-Gatters E2' angeschlossen ist. Der Ausgang des dritten Exklusiv-ODER-Gatters E3' ist mit dem Ausgang DA' für die verwürfelten Signale und außerdem mit dem einen Eingang des ersten Umschalters U1' verbunden, der in Verwürfelbetrieb diesen Eingang mit dem Eingang der ersten Stufe des Schieberegisters verbindet. Dadurch ist im Verwürfelbetrieb der erste Rückkopplungskreis geschlossen.

Mit den Ausgängen der achten und der elften Schieberegisterstufe sind die einen Eingänge eines vierten und eines fünften Exklusiv-ODER-Gatters E4' bzw. E5' verbunden, deren Ausgänge jeweils getrennt mit dem D-Eingang eines ersten bzw. zweiten getakteten D-Flipflops D1' bzw. D2' verbunden sind. Die Q-Ausgänge dieser beiden D-Flipflops sind jeweils getrennt mit Eingängen eines NAND-Gatters N' verbunden, dessen Ausgang mit dem Signaleingang EZ' eines Synchronzählers Z' mit einer Endstellung bei 33 verbunden sind. Dieser Synchronzähler Z' enthält neben einen Takteingang TZ' einen Signalausgang AZ', der mit dem einen Eingang des zweiten Exklusiv-ODER-Gatters E2' verbunden ist. Der andere Eingang dieses Exklusiv-ODER-Gatters ist mit dem Q-Ausgang eines ersten zusätzlichen D-Flipflops SO' verbunden. Über die Verbindung zwischen zweiten und dritten Exklusiv-ODER-Gatter wird schließlich der zweite Rückkopplungskreis geschlossen, der als Starthilfe bei periodischen Eingangssignalen dient. Zusätzlich enthält der zweite Rückkopplungsweg ein mit den Ausgängen der vierten und der fünften Schieberegisterstufe verbundenes sechstes Exklusiv-ODER-Gatter E6', dessen Ausgang mit dem einen Eingang eines siebten Exklusiv-ODER-Gatters E7' verbunden ist, an dessen anderen Eingang der Signaleingang DE' der Verwürfler- und Entwürfleranordnung angeschlossen ist. Mit diesem Signaleingang ist weiterhin der D-Eingang eines zweiten zusätzlichen getakteten D-Flipflops S-1' verbunden, dessen Q-Ausgang mit dem D-Eingang des ersten zusätzlichen getakteten D-Flipflops SO' und mit dem zweiten Signaleingang eines zweiten Umschalters U2' verbunden ist.

Der Ausgang des siebten Exklusiv-ODER-Gatters E7' ist mit dem D-Eingang eines dritten zusätzlichen D-Flipflops D3' verbunden, dessen Q-Ausgang mit dem ersten Eingang des zweiten Umschalters U2' verbunden ist. Der Ausgang dieses Umschalters ist mit dem zweiten Eingängen des vierten und des fünften Exklusiv-ODER-Gatters E4' bzw. E5' verbunden.

Während also im ersten Rückkopplungsweg wie beim Stande der Technik das nullte Bit mit dem sechsten und dem siebten Bit verglichen wird, wird im zweiten Rückkoppungskreis das Bit − 2 mit den Bits 4 und 5 verknüpft, mittels des getakteten dritten D-Flipflops D3' abgefragt und dem zweiten Umschalter U2' zugeführt, an dem die Information also um ein Bit früher als am ersten Umschalter U1' ansteht. Diese Information wird in der Schalterstellung a, also im Verwürfelbetrieb, vom zweiten Umschalter U2' an die zweiten Eingänge des vierten und des fünften Exklusiv-ODER-Gatters E4', E5' abgegeben. Durch die Abfrage der Information mittels des ersten und des zweiten D-Flipflops D1' bzw. D2' ergeben sich an den Eingängen des NAND-Gatters N' also die gleichen Bedingungen wie beim Stande der Technik, bei dem das Bit 0 mit den Bits 9 und 12 verknüpft worden ist.

Im Entwürfelbetrieb sind beide Umschalter U1' bzw. U2' in der Schaltstellung b, so daß in diesem Falle die Information direkt dem Schieberegister und dem vierten und fünften Exklusiv-ODER-Gatter E4' bzw. E5' zugeführt wird.

Bei der Anordnung nach der Fig. 2 sind maximal 2 Gatter hintereinander geschaltet, so daß sich also auch nur zwei Gatterlaufzeiten addieren und sich diese Verwürfler-Entwürfleranordnung deshalb für höhere Schaltgeschwindigkeiten eignet. Außerdem ist die Schieberegisterstufe S1' zwecks Realisierung des Umschalters U1' mittels D-Master-Slave-Flipflop mit Eingangsmultiplexer, der Umschalter U2' als separater Multiplexer und alle anderen Schieberegisterstufen und die D-Flipflops mittels D-Master-Slave-Flipflops aufgebaut.

## Ansprüche

1. Umschaltbare freilaufende Verwürfler- und Entwürfleranordnung mit einem mehrstufigen getakteten Schieberegister (S1'-S11'), an dessen Ausgänge der sechsten (S6') und der siebten (S7') Stufe die Eingänge eines ersten Exklusiv-ODER-Gatters (E1'), das zusammen mit wenigstens einem zweiten (E2') und einem dritten (E3') Exklusiv-ODER-Gatter in einem ersten Rückkopplungsweg enthalten ist, angeschlossen sind, daß an die Ausgänge weiterer Schieberegisterstufen (S8', S11') jeweils ein Eingang eines vierten (E4') und eines fünften (E5') Exklusiv-ODER-Gatters angeschlossen ist, die zusammen mit einem nachgeschalteten NAND-Gatter (N') und einem mit dem Ausgang des NAND-Gatters verbundenen getakteten Zähler (Z') in einem zweiten Rückkopplungsweg enthalten sind, daß dem mehrstufigen Schieberegister eine erste zusätzliche getaktete Schieberegisterstufe (S0') vorgeschaltet ist, deren Ausgang mit dem Eingang des zweiten im ersten Rückkopplungsweg angeordneten Exklusiv-ODER-Gatters (E2') und außerdem mit dem einen Eingang (b) eines ersten Umschalters (U1') verbunden ist, dessen anderer Eingang (a) mit dem Ausgang des dritten Exklusiv-ODER-Gatters (E3') und mit dem Signalausgang (DA') verbunden ist, und daß der Ausgang des ersten Umschalters (U1') mit dem Eingang des Schieberegisters und der Ausgang des Zählers (Z') mit einem Eingang des zweiten im ersten Rückkopplungsweg angeordneten Exklusiv-ODER-Gatters (E2') verbunden ist, dadurch gekennzeichnet, daß ein elfstufiges Schieberegister (S1'... S11') vorgesehen ist, daß der Ausgang des ersten (E1') und des zweiten (E2') Exklusiv-ODER-Gatters (E1', E2') jeweils getrennt mit den beiden Eingängen des dritten Exklusiv-ODER-Gatters (E3') verbunden ist, daß ein Eingang des vierten (E4') und des fünften (E5') Exklusiv-ODER-Gatters getrennt mit einem Ausgang der achten (S8') und der elften (S11') Schieberegisterstufe verbunden ist, daß der Ausgang des vierten Exklusiv-ODER-Gatters (E4') mit dem Eingang eines ersten getakteten D-Flipflops (D1') und der Ausgang des fünften Exklusiv-ODER-Gatters (E5') mit dem D-Eingang eines zweiten getakteten D-Flipflops (D2') verbunden ist, daß die Q-Ausgänge dieser beiden D-Flipflops jeweils getrennt mit den Eingängen des NAND-Gatters (N') verbunden sind, daß ein sechstes Exklusiv-ODER-Gatter (E6') vorgesehen ist, dessen Eingänge jeweils getrennt mit den Ausgängen der vierten (S4') und der fünften (S5') Schieberegisterstufe und dessen Ausgang mit dem einen Eingang eines siebten Exklusiv-ODER-Gatters (E7') verbunden ist, dessen anderer Eingang mit dem Eingang (DE') für das umzuformende Signal und dessen Ausgang mit dem D-Eingang eines dritten D-Flipflops (D3') verbunden ist, daß ein zweiten Umschalter (U2') vorgesehen ist, dessen einer Eingang (a) mit dem Q-Ausgang des dritten D-Flipflops (D3') und dessen anderer Eingang (b) mit dem Q-Ausgang einer zweiter zusätzlichen Schieberegisterstufe (S1') verbunden ist, die zwischen Signaleingang und erster zusätzlicher Schieberegisterstufe (S0') geschaltet ist und daß der Ausgang des zweiten Umschalters (U2') mit den zweiten Eingängen des vierten und des fünften Exklusiv-ODER-Gatters (E4', E5') verbunden ist.

2. Umschaltbare freilaufende Verwürfler- und Entwürfleranordnung nach Anspruch 1, dadurch gekennzeichnet, daß die erste zusätzliche Schieberegisterstufe (S-1') zwecks Realisierung des ersten Umschalters (U1') mittels D-Master-Slave-Flipflop mit Eingangsmultiplexer, der zweite Umschalter (U2') als separater Multiplexer und alle anderen Schieberegisterstufen und die D-Flipflops mittels D-Master-Slave-Flipflops aufgebaut sind.

**Claims**

1. A switchable, free running scrambler/descrambler arrangement having a multistage clock pulse controlled shift register (S1'-S11') in which the outputs of the sixth (S6') and the seventh (S7') stages are connected to the inputs of a first EXCLUSIVE-OR gate (E1') which, together with at least one second (E2') and one third (E3') EXCLUSIVE-OR gate is contained in a first feedback arm, that the outputs of further shift register stages (S8', S11') are respectively connected to an input of a fourth (E4') and a fifth (E5') EXCLUSIVE-OR gate which, together with a following NAND gate (N') and a clock pulse controlled counter (Z') connected to the output of the NAND gate, is contained in a second feedback path, that the multi-stage shift register is preceded by a first additional clock pulse controlled shift register stage (S0') whose output is connected to the input of the second EXCLUSIVE-OR gate (E2') which is arranged in the first feedback path and is additionally connected to the first input (b) of a first change-over switch (U1') whose other input (a) is connected to the output of the third EXCLUSIVE-OR gate (E3') and to the signal output (DA), and that the output of the first change-over switch (U1') is connected to the input of the shift register, whereas the output of the counter (Z') is connected to an input of the second EXCLUSIVE-OR gate (E2') arranged in the first feedback path, characterised in that an eleven-stage shift register (S1'... S11') is provided, that the output of the first (E1') and the second (E2') EXCLUSIVE-OR gates are each separately connected to the inputs of the third EXCLUSIVE-OR gate (E3'), that an input of the fourth (E4') and the fifth (E5') EXCLUSIVE-OR gates are separately connected to an output of the eighth (S8') and the eleventh (S11') shift register stages, that the output of the fourth EXCLUSIVE-OR gate (E4') is connected to the D-input of a first clock pulse controlled D-flip-flop (D1'), and the output of the fifth EXCLUSIVE-OR gate (E5') is connected to the D-input of a second clock pulse controlled D-flip-flop (D2'), that the Q-outputs of these two D-flip-flops are each separately connected to the inputs of the NAND gate (N'), that a sixth EXCLUSIVE-OR gate (E6') is provided whose inputs are each separately connected to the outputs of the fourth (S4') and the fifth (S5') shift register stages and whose output is connected to the first input of a seventh EXCLUSIVE-OR gate (E7') whose other input is connected to the input (DE') for the signal to be converted and whose output is connected to the D-input of a third D-flip-flop (D3'), that a second change-over switch (U2') is provided whose first input (a) is connected to the Q-output of the third D-flip-flop (D3') and whose other input (b) is connected to the Q-output of a second additional shift register stage (S1') which is connected between the signal input and the first additional shift register stage (S0'), and that the output of the second change-over switch (U2') is connected to the second inputs of the fourth and fifth EXCLUSIVE-OR gates (E4', E5').

2. A free running scrambler/descrambler arrangement having switch-over facilities as claimed in claim 1 characterised in that the first additional shift register stage (S1') which serves to form the first change-over switch (U1') comprises a D master-slave flip-flop with an input multiplexer, the second change-over switch (U2') comprises a separate multiplexer, and all the other shift register stages and the D-flip-flops comprise D master-slave flip-flops.

**Revendications**

1. Dispositif embrouilleur et désembrouilleur commutable et à fonctionnement indépendant comportant un registre à décalage (S1'-S11') cadencé et à plusieurs étages, aux sorties des sixième (S6') et septième (S7') étages duquel sont reliées les entrées d'un premier circuit OU-Exclusif (E1') qui est contenu avec au moins un second (E2') et un troisième (E3') circuits OU-Exclusif dans une première voie de contre-réaction, qu'aux sorties d'autres étages (S8', S11') du registre à décalage sont respectivement reliées une entrée d'un quatrième (E4') et un cinquième (E5') circuits OU-Exclusif qui sont contenus, conjointement avec un circuit NON-ET (N') aval et avec un compteur cadencé (Z') relié à la sortie du circuit NON-ET, dans une seconde voie de contre-réaction, qu'en amont du registre à décalage à étages multiples est monté un premier registre à décalage supplémentaire cadencé (S0') dont la sortie est reliée à l'entrée du second circuit OU-Exclusif (E2') disposé dans la première voie de contre-réaction et en outre à une entrée (b) d'un premier commutateur (U1') dont l'autre entrée (a) est reliée à la sortie du troisième circuit OU-Exclusif (E3') et à la sortie (A1) des signaux, et que la sortie du premier commutateur (U1') est reliée à l'entrée du registre à décalage, et la sortie du compteur (Z') est reliée à une entrée du second circuit OU-Exclusif (E2') disposé dans la première voie de contre-réaction, caractérisé par le fait qu'il est prévu un registre à décalage à onze étages (S1'... S11'), que la sortie du premier (E1') et du second (E2') circuits OU-Exclusif sont respectivement et séparément reliées aux deux entrées du troisième circuit OU-Exclusif (E3'), qu'une entrée du quatrième (E4') et du cinquième (E5') circuits OU-Exclusif sont reliées séparément à une sortie du huitième (S8') et du onzième (S11') étages du registre à décalage, que la sortie du quatrième circuit OU-Exclusif (E4') est reliée à l'entrée D d'un premier multivibrateur bistable cadencé D (D1') et la sortie du cinquième circuit OU-Exclusif (E5') est reliée à l'entrée D d'un second multivibrateur bistable cadencé D (D2'), que les sorties Q de ces deux multivibrateurs bistables D sont reliées respectivement et séparément aux entrées du circuit NON-ET (N'), qu'il est prévu un sixième circuit OU-Exclusif (E6') dont les entrées sont respectivement et séparément reliées aux sorties du quatrième (S4') et du cinquième (S5') étages du registre à décalage et dont la sortie est reliée à une entrée d'un septième circuit OU-Exclusif (E7'), dont l'autre entrée est reliée à l'entrée (DE') pour le signal dont la forme est à modifier, et dont la sortie est reliée à l'entrée D d'un troisième multivibrateur bistable D (D3'), qu'il est prévu un second commutateur (U2') dont une entrée (a) est reliée à la sortie Q du troisième multivibrateur bistable D (D3') et dont l'autre entrée (b) est reliée à la sortie Q d'un second étage supplémentaire du registre à décalage (S1'), qui est monté entre l'entrée des signaux et le premier étage supplémentaire (S0') du registre à décalage, et que la sortie du second commutateur (U2') est reliée aux secondes entrées du quatrième et du cinquième circuits OU-Exclusif (E4', E5').

2. Dispositif embrouilleur et désembrouilleur commutable et fonctionnant de façon indépendante selon la revendication 1, caractérisé par le fait que le premier étage supplémentaire (S1') du registre à décalage est constitué, en vue de réaliser le premier commutateur (U1'), à l'aide d'un multivibrateur bistable maître-esclave du type D avec multiplexeur d'entrée, que le second commutateur (U2') est réalisé sous la forme d'un multiplexeur séparé et que tous les autres étages du registre à décalage et les multivibrateurs bistables D sont constitués à l'aide de multivibrateurs bistables maître-esclave du type D.

FIG 1

FIG 2

0 035 674